**Europäisches Patentamt**

**European Patent Office**

**Office européen des brevets**

(11) Numéro de publication : **0 469 987 A1**

(12) **DEMANDE DE BREVET EUROPEEN**

(21) Numéro de dépôt : **91402128.2**

(22) Date de dépôt : **30.07.91**

(51) Int. Cl.$^5$ : **G06F 15/68,** G06K 9/46

(30) Priorité : **31.07.90 FR 9009744**

(43) Date de publication de la demande :
**05.02.92 Bulletin 92/06**

(84) Etats contractants désignés :
**BE DE GB IT NL SE**

(71) Demandeur : **THOMSON-TRT DEFENSE**
**88, rue Brillat-Savarin**
**F-75013 Paris (FR)**

(72) Inventeur : **Dufour, Jean-Yves**
**THOMSON-CSF, SCPI, Cédex 67**
**F-92045 Paris la Défense (FR)**
Inventeur : **LeGall, Serge**
**THOMSON-CSF, SCPI, Cédex 67**
**F-92045 Paris la Défense (FR)**
Inventeur : **Waldburger, Hugues**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Procédé pour déterminer en temps réel l'existence d'une configuration rectiligne de pixels dans une image numérisée.**

(57)    Ce dispositif comprend des moyens pour mémoriser le voisinage d'un pixel, et des moyens pour comparer ce voisinage à une série de configurations caractéristiques de manière à désigner le pixel correspondant comme appartenant à une configuration rectiligne si et seulement si la comparaison détermine une concordance du voisinage de ce pixel avec l'une de ces configurations caractéristiques.

Il est caractérisé en ce que ledit voisinage sur lequel on opère la comparaison comprend deux couronnes carrées concentriques et non jointives (CI, CE) définies autour du pixel considéré.

Lesdits moyens pour comparer le voisinage à une série de configurations caractéristiques comprennent de préférence un circuit logique programmable, programmé conformément à une équation logique unique appliquée audit voisinage mémorisé, le pixel considéré étant désigné comme étant un pixel de configuration rectiligne si et seulement si cette équation logique est vérifiée.

FIG.3

EP 0 469 987 A1

La présente invention concerne un procédé et un dispositif pour localiser des configurations rectilignes dans une image numérisée.

Cette opération, souvent connue sous le nom de « test de configuration », consiste, après avoir traité une image brute formée d'une trame bidimensionnelle de pixels présentant chacun un niveau binaire déterminé, par exemple l'image délivrée par une caméra vidéo après un certain nombre de traitements appropriés éventuels (filtrage, extraction de contours, rebouchage de trous, etc.), à déterminer, pour chaque pixel appartenant à une configuration, si ce pixel appartient à une configuration rectiligne — auquel cas on lui affectera par exemple la valeur "1 "—, ou non — auquel cas on lui affectera la valeur "0".

Cette dernière étape, qui fait l'objet du procédé de l'invention, peut notamment être l'une des étapes d'un traitement d'analyse d'une scène dans laquelle on cherche à reconnaître des formes caractérisées par des contours rectilignes.

Cette application à la reconnaissance de formes n'est cependant pas limitative de la présente invention, qui peut également être utilisée pour d'autres applications, chaque fois que l'on cherche à reconnaître dans une image des configurations rectilignes, c'est-à-dire à déterminer ou estimer si certaines traces de l'image sont droites (configuration rectiligne) ou non (configuration curviligne).

Plus précisément, le test de configuration consiste à tester, en chaque point M de coordonnées $(x,y)$ appartenant à une trace sur l'image, si les points de cette même trace présents dans un voisinage donné de ce point $M(x,y)$ sont susceptibles de constituer des segments de droite passant par ce point M — auquel cas on décidera que ce point M appartient à un contour rectiligne.

A cet effet, on compare le voisinage de chaque point M avec un certain nombre de « masques » ou configurations de référence différents censés approximer un segment de contour rectiligne.

Si l'on détermine qu'il y a concordance effective du voisinage étudié avec l'un quelconque de ces masques de référence, alors on décide que l'on est effectivement en présence d'une configuration rectiligne.

La difficulté de cette opération tient principalement au choix du voisinage considéré pour effectuer le test.

En effet, jusqu'à présent, le choix d'un masque de voisinage de dimension suffisante pour assurer une précision satisfaisante du point de vue de l'estimation du caractère rectiligne aboutissait toujours à des algorithmes de traitement ou des architectures matérielles ne permettant pas d'effectuer en temps réel (c'est-à-dire à la cadence vidéo des images produites) le test de configuration, *a fortiori* d'effectuer en temps réel un traitement d'image complet incluant un tel test de configuration.

L'un des buts de l'invention est de proposer un traitement particulier, avec son architecture adaptée, permettant de réaliser en temps réel ce traitement de reconnaissance des configurations rectilignes.

A cet effet, dans un procédé du type précité dans lequel on compare le voisinage d'un pixel donné de cette image à une série de configurations caractéristiques et on désigne ce pixel comme appartenant à une configuration rectiligne si et seulement si la comparaison détermine une concordance du voisinage de ce pixel avec l'une de ces configurations caractéristiques, le voisinage considéré comprend, selon l'invention, deux couronnes concentriques et non jointives, typiquement des couronnes carrées, définies autour du pixel considéré.

Ces deux couronnes carrées concentriques et non jointives peuvent notamment être constituées par la couronne 5 x 5 et par la couronne 9 x 9 entourant le pixel considéré.

Par ailleurs, selon une caractéristique particulièrement avantageuse de la présente invention, l'ensemble desdites configurations caractéristiques est défini sous forme d'une équation logique unique appliquée au contenu dudit voisinage, le pixel considéré étant désigné comme étant un pixel de configuration rectiligne si et seulement si cette équation logique est vérifiée.

Cette équation logique unique peut notamment être une factorisation de vecteurs logiques CE et CI tels que :

. $CE[i] = 1$ si et seulement si le $i^{ème}$ élément de la couronne externe est non nul,

. $CI[i] = 1$ si et seulement si, pour i pair, le $(i/2)^{ème}$ élément de la couronne interne est non nul, et

. $CI[i] = 1$ si et seulement si, pour i impair, le $((i-1)/2)^{ème}$ ou le $((i+1)/2)^{ème}$ élément de la couronne interne est non nul.

L'invention a également pour objet un dispositif pour déterminer l'existence d'une configuration rectiligne de pixels dans une image numérisée, comprenant des moyens pour mémoriser le voisinage d'un pixel, et des moyens pour comparer ce voisinage à une série de configurations caractéristiques de manière à désigner le pixel correspondant comme appartenant à une configuration rectiligne si et seulement si la comparaison détermine une concordance du voisinage de ce pixel avec l'une de ces configurations caractéristiques, ce dispositif étant caractérisé en ce que ledit voisinage sur lequel on opère la comparaison comprend deux couronnes carrées concentriques et non jointives définies autour du pixel considéré.

Lesdits moyens pour comparer ce voisinage à une série de configurations caractéristiques comprennent avantageusement un circuit logique programmable, programmé conformément à une équation logique unique appliquée audit voisinage mémorisé, le pixel considéré étant désigné comme étant un pixel de configuration rectiligne si et seulement si cette équation logique est vérifiée.

On va maintenant décrire un mode de mise en oeuvre de l'invention, en référence aux dessins annexés.

La figure 1 montre les deux couronnes concentriques définissant le voisinage utilisé lors de l'étape de test de configuration.

La figure 2 montre une partie des masques correspondant aux différentes configurations caractérisant un contour rectiligne.

La figure 3 est un schéma par blocs illustrant une architecture permettant de mettre en oeuvre en temps réel le traitement selon l'invention.

Comme on l'a indiqué plus haut, l'invention concerne une étape de test de configuration, dans laquelle on compare le voisinage de chaque point M avec un certain nombre de masques ou configurations de référence différents censés approximer un segment de contour rectiligne.

Si l'on détermine qu'il y a concordance effective du voisinage étudié avec l'une quelconque de ces configurations de référence, alors on décide que l'on est effectivement en présence d'un contour rectiligne.

Le choix du voisinage en question est une question importante.

En particulier, du seul point de vue de la qualité du traitement, l'augmentation de la taille du voisinage se traduit par une meilleure précision en ce qui concerne l'estimation du caractère rectiligne des segments retenus, un voisinage étendu permettant de mieux distinguer un contour effectivement rectiligne d'un contour légèrement curviligne.

Mais en revanche, il est bien évident que plus le voisinage sera étendu plus la réalisation matérielle des circuits sera rendue difficile, l'augmentation du nombre de paramètres à prendre en compte entraînant une complexité et un dimensionnement croissants des circuits.

Ainsi, si par exemple un masque de voisinage de dimension 9 x 9 constitue un choix satisfaisant du point de vue de la qualité du traitement, il faut normalement traiter un voisinage constitué de 9 x 9 = 81 pixels, entraînant une complexité et un dimensionnement des circuits incompatible avec un traitement en temps réel à la cadence vidéo.

L'invention propose, pour limiter la complexité des calculs, au lieu de retenir pour le test de configuration l'ensemble de ces 81 pixels, de limiter le voisinage à deux couronnes concentriques et non jointives, la première consistant en une couronne 5 x 5 d'un pixel de large, et la seconde en une couronne 9 x 9, également d'un pixel de large (ces dimensions n'étant bien entendu données qu'à titre illustratif, sans aucun caractère limitatif).

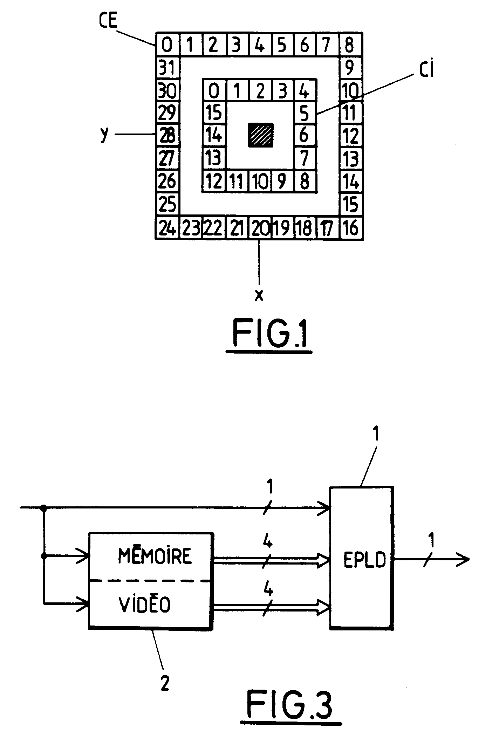

Ces deux couronnes ont été illustrées sur la figure 1 en CI (couronne interne 5 x 5) et CE (couronne externe 9 x 9), et l'on voit ainsi que l'on peut se contenter d'étudier un ensemble de 48 points seulement, soit près de la moitié seulement d'un voisinage complet de 81 pixels.

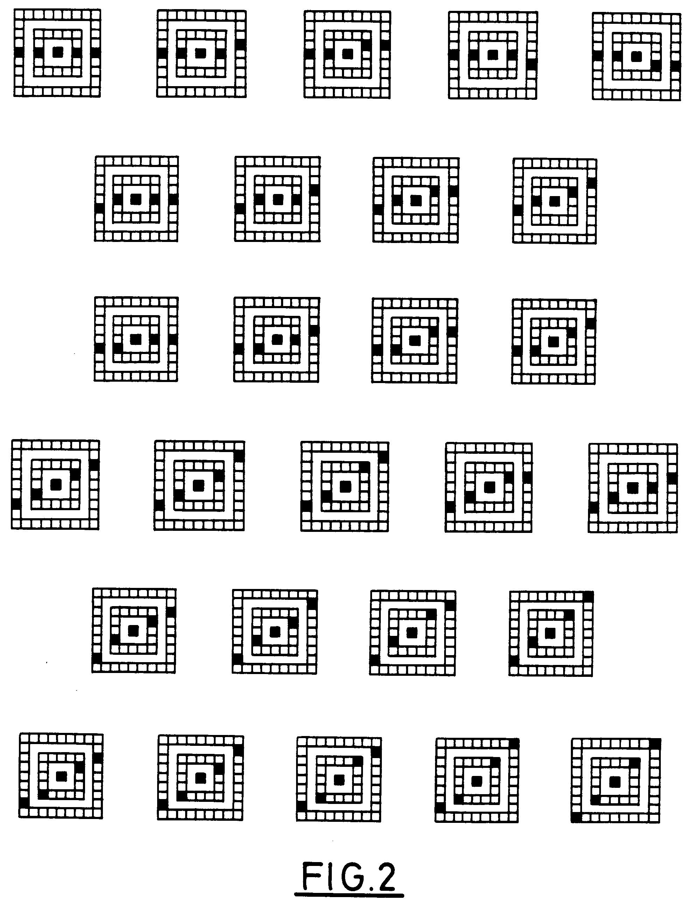

On a représenté sur la figure 2 une partie du jeu de configurations de référence ou « masques de voisinage » pour lesquels on considère qu'il y a effectivement contour rectiligne.

Le sous-ensemble de masques illustré figure 2 correspond à des directions de segment formant un angle compris entre 0 et 45° par rapport à l'horizontale (avec les conventions de la figure).

Les autres masques de l'ensemble se déduisent simplement du sous-ensemble illustré figure 2 par des symétries d'axe vertical et horizontal et des rotations d'un quart de tour, afin de couvrir toutes les directions comprises entre 45° et 360°.

On obtient ainsi 102 masques différents. Si le voisinage constitué par les 48 points des deux couronnes 5 x 5 et 9 x 9 du pixel considéré concorde avec l'un quelconque de ces 102 masques, on considérera alors que le pixel central appartient à une configuration rectiligne.

Très avantageusement, pour simplifier le calcul, on va réunir l'ensemble de ces configurations de référence sous la forme d'un ensemble restreint d'équations logiques, ce qui permettra de réduire le nombre de comparaisons nécessaires au test (il faudrait sinon effectuer 102 comparaisons, à savoir une pour chaque configuration de référence).

Ainsi, le test de l'une (i) des n configurations peut être réalisé par une équation logique de la forme:

$$L(i) = B_0 \wedge B_1(i) \wedge B_2(i) \wedge B_3(i) \wedge B_4(i),$$

où :

. $B_k(i)$ est VRAI si et seulement si le pixel situé dans le $k^{ième}$ élément de la configuration est non nul, et

. $B_0$ est VRAI si et seulement si le pixel traité est un point de contour.

Le résultat du test est donné par un OU logique sur les résultats de tous les tests $L(i)$ :

$$L = \bigvee_{i=1\ldots n} L(i)$$

On va maintenant montrer que l'on peut, par une définition appropriée de vecteurs logiques, mettre ce test L sous forme d'une factorisation de vecteurs.

Notons à cet effet CE (Couronne Externe) et CI (Couronne Interne) les vecteurs logiques définis de la manière suivante :

. $CE[i] = 1$ si et seulement si le $i^{ième}$ élément de la couronne externe est non nul,

. $CI[i] = 1$ si et seulement si, pour i pair, le $(i/2)^{ième}$ élément de la couronne interne est non nul, et

. $CI[i] = 1$ si et seulement si, pour i impair, le $((i-1)/2)^{ième}$ ou le $((i+1)/2)^{ième}$ élément de la couronne interne est non nul.

Par ailleurs, si A et B désignent deux vecteurs

logiques, notons :

. $\underline{A[i]} = A[i-1] \vee A[i] \vee A[i+1]$,

. $(A \wedge B)[i] = A[i] \wedge B[i]$,

. $\vee A = A[0] \vee A[1] \vee ... \vee A[n-1]$,

. $A^+ = (A[n-1], A[0] ... A[n/2-1]$ (c'est-à-dire la moitié supérieure des composantes), et

. $A^- = (A[n/2-1], A[n/2] ... A[n-1]$ (c'est-à-dire la moitié inférieure des composantes).

Le test peut alors être mis en facteur sous la forme :

$$L = B_0 \wedge \vee ((CE \wedge CI)^+ \wedge \underline{(CE \wedge CI)}^-)$$

En d'autres termes, on examine si l'on trouve deux éléments voisins situés respectivement sur la couronne interne et la couronne externe (test $(CE \wedge CI)^+$) puis si, dans la direction opposée, il existe également deux éléments voisins situés respectivement sur la couronne interne et la couronne externe (test $\underline{(CE \wedge CI)}^-$), et l'on teste enfin si ces deux demi-segments sont situés en vis-à-vis (test global $(CE \wedge CI)^+ \wedge \underline{(CE \wedge CI)}^-$).

Ce test global est effectué pour chacun des n points du voisinage considéré (opérateur général OU $\vee$).

Si ce OU global est VRAI et que le pixel central est un point de contour ($B_0$ VRAI), alors le contour auquel appartient ce pixel est un contour rectiligne.

Ce procédé peut être mis en oeuvre par une architecture telle que celle illustrée figure 2, permettant d'opérer en temps réel, même pour des cadences vidéo très élevées (pouvant atteindre jusqu'à 20 MHz pour la cadence des pixels).

En particulier, le test de configuration peut être effectué par un étage comprenant un composant logique programmable de type EPLD (*Erasable Programmable Logical Device*), référencé 1 sur la figure.

Ces composants, qui, typiquement, permettent de réaliser un nombre important d'opérations logiques à cadence rapide, sont constitués, de manière en elle-même bien connue, de portes logiques OU et ET groupées en cellules terminées par des registres de mémorisation. Au moyen d'un outil de développement adapté, l'utilisateur programme chaque cellule ainsi que les connexions entre les cellules de manière à matérialiser l'expression logique voulue correspondante.

Dans le cas présent, on réalise le test de configuration par exemple au moyen d'un composant *EPM 5128* commercialisé par ALTERA, qui est un circuit comprenant 138 macrocellules.

Ce composant est ainsi programmé de façon à réaliser la fonction logique indiquée plus haut, correspondant au test de configuration.

Essentiellement, pour mettre en oeuvre les équations de ce test, il est nécessaire d'une part d'avoir à chaque coup d'horloge accès au voisinage 9 x 9 complet et, d'autre part, de calculer les valeurs logiques en mode pipeline. Ceci peut être réalisé en seulement trois étapes, en considérant que le voisinage est stocké en mode glissant dans une mémoire vidéo 2, ce qui implique d'avoir en tout 8 x 9 valeurs binaires ; à chaque coup d'horloge, 9 pixels sont alors acquis et mémorisés.

A chaque coup d'horloge, on a donc accès au voisinage complet, constitué des 9 pixels de la ligne courante et des 9 pixels de chacune des huit lignes précédentes, stockées dans la mémoire vidéo 2.

On montre que la mise en oeuvre des équations mentionnées plus haut peut être ainsi réalisée avec seulement 108 cellules (entrées, registres, etc.), ce qui permet d'utiliser un composant EPLD disponible de type courant, par exemple le composant *EPM 5128* précité à 128 macrocellules.

On notera que, en choisissant une implémentation conforme aux équations explicitées plus haut, on peut arriver à un nombre de cellules inférieur à 128, permettant d'aboutir à l'optimisation recherchée. Autrement, et même en élaborant des algorithmes réutilisant des morceaux d'équations de manière temporelle, on aboutirait à un nombre d'équations — et de retards associés — supérieur à 128, impliquant donc l'utilisation d'EPLDs d'au moins 128 cellules, ce qui rendrait impossible toute optimisation.

En ce qui concerne la mémoire vidéo 2, on peut utiliser notamment le circuit universel « MIP *Video Memory* », qui est l'un des circuits développés dans le cadre du programme européen EURÊKA (projet « MIP » n° EU34: *Modular Image Processing*).

Ce circuit *Video Memory* permet notamment de mémoriser quatre lignes vidéo de 1024 pixels chacune (taille maximale, programmable par commande externe, et limitée ici à 9 pixels) et offre la possibilité de scinder la mémoire en deux sous-mémoires alimentées séparément par deux signaux vidéo distincts, permettant donc de mémoriser huit lignes, comme le requiert la présente invention pour opérer sur un voisinage 9 x 9.

La mémoire 2 est ainsi en mesure de délivrer, à la cadence vidéo, une colonne de cinq pixels (les quatre pixels mémorisés plus le pixel courant) à l'EPLD 1 placé en aval.

## Revendications

1. Un procédé pour déterminer l'existence d'une configuration rectiligne de pixels dans une image numérisée, procédé dans lequel on compare le voisinage d'un pixel donné de cette image à une série de configurations caractéristiques et on désigne ce pixel comme appartenant à une configuration rectiligne si et seulement si la comparaison détermine une concordance du voisinage de ce pixel avec l'une de ces configurations caractéristiques,

procédé caractérisé en ce que ledit voisinage comprend deux couronnes (CE, CI) concentriques et non jointives définies autour du pixel considéré.

2. Le procédé de la revendication 1, dans lequel les deux couronnes concentriques et non jointives sont des couronnes carrées.

3. Le procédé de la revendication 2, dans lequel les deux couronnes carrées concentriques et non jointives sont constituées par la couronne 5 x 5 et par la couronne 9 x 9 entourant le pixel considéré.

4. Le procédé de la revendication 1, dans lequel l'ensemble desdites configurations caractéristiques est défini sous forme d'une équation logique unique appliquée au contenu dudit voisinage, le pixel considéré étant désigné comme étant un pixel de configuration rectiligne si et seulement si cette équation logique est vérifiée.

5. Le procédé de la revendication 4, dans lequel ladite équation logique unique est une factorisation de vecteurs logiques CE et CI tels que :

. $CE[i] = 1$ si et seulement si le $i^{ème}$ élément de la couronné externe est non nul,

. $CI[i] = 1$ si et seulement si, pour i pair, le $(i/2)^{ème}$ élément de la couronne interne est non nul, et

. $CI[i] = 1$ si et seulement si, pour i impair, le $((i-1)/2)^{ème}$ ou le $((i+1)/2)^{ème}$ élément de la couronne interne est non nul.

6. Un dispositif pour déterminer l'existence d'une configuration rectiligne de pixels dans une image numérisée, comprenant :

– des moyens (2) pour mémoriser le voisinage d'un pixel, et

– des moyens (1) pour comparer ce voisinage à une série de configurations caractéristiques de manière à désigner le pixel correspondant comme appartenant à une configuration rectiligne si et seulement si la comparaison détermine une concordance du voisinage de ce pixel avec l'une de ces configurations caractéristiques,

dispositif caractérisé en ce que ledit voisinage sur lequel on opère la comparaison comprend deux couronnes carrées concentriques et non jointives définies autour du pixel considéré.

7. Le dispositif de la revendication 5, caractérisé en ce que lesdits moyens (1) pour comparer ce voisinage à une série de configurations caractéristiques comprennent un circuit logique programmable, programmé conformément à une équation logique unique appliquée audit voisinage mémorisé, le pixel considéré étant désigné comme étant un pixel de configuration rectiligne si et seulement si cette équation logique est vérifiée.

FIG.1

FIG.3

# FIG.2

Office européen
des brevets

**RAPPORT DE RECHERCHE EUROPEENNE**

Numero de la demande

EP    91 40 2128

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | WO-A-8 703 118 (NCR CORPORATION) 21 Mai 1987<br>* abrégé *<br>* page 1, ligne 24 - page 2, ligne 33 *<br>* page 5, ligne 20 - page 6 *<br>* page 27 - page 30; figures 2,3 * | 1,2 | G06F15/68<br>G06K9/46 |
| A | | 3,6 | |
| | --- | | |
| A | US-A-4 789 933 (VICTOR C. CHEN ET AL.) 6 Décembre 1988<br>* abrégé *<br>* figure 2 *<br>* colonne 3, ligne 8 - ligne 16 *<br>* colonne 10, ligne 63 - colonne 11 * | 1 | |
| | ----- | | |

|  |  |  | **DOMAINES TECHNIQUES RECHERCHES (Int. Cl.5 )** |
|---|---|---|---|
| | | | G06F<br>G06K |

Le présent rapport a été établi pour toutes les revendications

| Lieu de la recherche | Date d'achèvement de la recherche | Examinateur |
|---|---|---|
| LA HAYE | 08 NOVEMBRE 1991 | CHATEAU J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P0402)